(19) **Europäisches Patentamt**
**European Patent Office**
**Office européen des brevets**

(11) **EP 2 453 261 B1**

(12) **FASCICULE DE BREVET EUROPEEN**

(45) Date de publication et mention
de la délivrance du brevet:
**03.07.2013 Bulletin 2013/27**

(51) Int Cl.:
***G01S 19/20*** *(2010.01)*

(21) Numéro de dépôt: **11187672.8**

(22) Date de dépôt: **03.11.2011**

(54) **Procédé de détection de la deformation d'un signal GNSS**

GNSS-Signalverzerrungserkennungsverfahren

Method for GNSS signal distortion detection

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.11.2010 FR 1004415**

(43) Date de publication de la demande:
**16.05.2012 Bulletin 2012/20**

(73) Titulaire: **Thales
92200 Neuilly Sur Seine (FR)**

(72) Inventeurs:
• **Kubrak, Damien
31400 TOULOUSE (FR)**
• **Monnerat, Michel
31240 SAINT JEAN (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**FR-A1- 2 818 470    US-A1- 2004 189 518**

• **GABRIEL WONG ET AL.: "Characterization of
Signal Deformations forGPS and WAAS
Satellites", 23RD INTERNATIONAL TECHNICAL
MEETING OF THE SATELLITE DIVISION OFTHE
INSTITUTE OF NAVIGATION, 24 septembre 2010
(2010-09-24), pages 3143-3151, XP002641795,
U.S.A.**
• **Sanjeev Gunawardena: "DEVELOPMENT OF A
TRANSFORM-DOMAIN INSTRUMENTATION
GLOBAL POSITIONING SYSTEM RECEIVER FOR
SIGNAL QUALITY AND ANOMALOUS EVENT
MONITORING", dissertation, Ohio University , 30
juin 2007 (2007-06-30), pages 82-105,
XP002641796, U.S.A. Extrait de l'Internet: URL:
http://etd.ohiolink.edu/send-pdf.cgi/G
unawardena%20Sanjeev.pdf?ohiou1178558967
[extrait le 2011-06-09]**
• **HASAN M K ET AL: "Autocorrelation model-
based identification method for ARMA systems
in noise", IEE PROCEEDINGS: VISION, IMAGE
AND SIGNAL PROCESSING, INSTITUTION OF
ELECTRICAL ENGINEERS, GB, vol. 152, no. 5, 7
octobre 2005 (2005-10-07), pages 520-526,
XP006024997, ISSN: 1350-245X, DOI: DOI:
10.1049/IP-VIS:20045042**

**Description**

Le domaine de l'invention concerne les systèmes de positionnement et/ou de radionavigation par satellites communément désignés par le terme systèmes GNSS (« Global Navigation Satellite System). En particulier l'invention est applicable aux systèmes GNSS connus GPS (« Global Positioning System») et GALILEO.

Plus précisément, le domaine de l'invention est celui des systèmes d'augmentation de la disponibilité des systèmes GNSS qui permettent l'exploitation des signaux GNSS transmis par les satellites même lorsque leur intégrité est modifiée.

Le signal émis par un satellite GNSS peut être affecté d'erreurs aléatoires qui entrainent une déformation du signal et le rendent non conforme aux spécifications du système. De telles erreurs concernent par exemple une modification aléatoire de la période des codes d'étalement qui engendre une rupture de stationnarité dans le signal ou encore la présence d'ondulations qui modifient la forme carrée, caractéristique d'un signal modulé par un code d'étalement, attendue en sortie du générateur de signal.

De telles erreurs sont liées à l'implémentation de l'émetteur à bord du satellite et en particulier aux défauts des équipements qui ne sont pas parfaits.

Les mesures effectuées sur un signal GNSS non conforme et entaché de tels défauts sont sujettes à erreurs et vont entrainer un mauvais positionnement du récepteur GNSS qui exploite ce signal. Il est donc important de pouvoir détecter de telles erreurs afin d'alerter le récepteur de la non-conformité du signal qu'il exploite et d'éviter des erreurs de positionnement ou de navigation qui peuvent avoir des conséquences critiques.

Par la suite, on parlera de signaux « evil waveform » pour désigner des signaux GNSS affectés d'erreurs ou de déformations qui sont la conséquence de défauts des équipements matériels à bord du satellite.

Les solutions connues permettant de détecter des signaux « evil waveform » sont le plus souvent basées sur l'exploitation de la fonction de corrélation en sortie des intégrateurs du récepteur GNSS. Cette technique a pour principal inconvénient de ne pas différencier les erreurs liées aux imperfections de l'émetteur à bord du satellite et celles liées aux multitrajets liés aux réflexions du signal sur les différentes couches de l'ionosphère. De plus ces techniques sont très sensibles au bruit ambiant. Les erreurs liées à la transmission du signal sont corrigeables par des traitements appropriés et doivent être dissociées des erreurs introduites dès la génération du signal.

On connait également le document "Characterization of signal déformations for GPS and WAAS satellites, 23rd international technical meeting of the satellite division of the institute of navigation" publié le 24/09/2012 qui divulgue une méthode de mesure des déformations impactant les signaux émis par des satellites GNSS à partir de signaux réels.

On connait également le document « Development of a transform-domain instrumentation global positioning system receiver for signal quality and anomalous event monitoring », Sanjeev Gunawardena, dissertation, Ohio University, 30 juin 2007, pages 82-105,USA. Ce document divulgue une méthode d'évaluation et de modélisation des perturbations engendrées par la partie « front-end » d'un récepteur GNSS sur le signal de sortie du récepteur. Ce document n'aborde cependant pas le problème des déformations impactant directement le signal reçu et de la détection de signaux de type « evil waveform ».

La présente invention propose de pallier les limitations de l'art antérieur grâce à une solution basée sur la modélisation du signal GNSS et un calcul de prédiction linéaire permettant de détecter les déformations intrinsèques du signal et de lever une alerte, par exemple par le biais d'un système d'augmentation, pour invalider les mesures de pseudo-distances effectuées sur ce signal en vue de déterminer une information de positionnement.

L'invention a notamment pour avantage de limiter les fausses alarmes associées à des détections d'erreurs de transmission et d'être plus robuste au bruit.

A cet effet, l'invention a pour objet un procédé de détection de la déformation d'un signal GNSS transmis par au moins un satellite GNSS et reçu par au moins un récepteur GNSS, ladite déformation ayant pour origine un défaut de génération du signal GNSS, ledit procédé étant caractérisé en ce qu'il comporte au moins les étapes suivantes :

> o une étape de détermination d'au moins un modèle paramétrique autorégressif du signal GNSS en sortie d'un étage de corrélation que comporte ledit récepteur GNSS,
> o une étape de calcul d'au moins une erreur de prédiction linéaire e(n) entre ledit signal de sortie de l'étage de corrélation et ledit modèle paramétrique autorégressif,
> o au moins une étape de comparaison de l'erreur de prédiction linéaire à un seuil de détection,
> o une étape de décision sur la déformation du signal GNSS transmis dans le cas où l'erreur de prédiction linéaire dépasse ledit seuil de détection.

Dans un aspect particulier de l'invention, le modèle paramétrique autorégressif est obtenu par application d'une des méthodes suivantes : méthode des covariances, méthode des covariances modifiées, méthode de Yule Walker.

Dans un autre aspect particulier de l'invention, le calcul de l'erreur de prédiction linéaire e(n) est effectué au moins à l'aide de la relation suivante : $e(n) = x(n) - \hat{x}(n) = x(n) - \sum_{k=1}^{p} a_k x(n-k)$, où ak sont les coefficients du modèleautorégressif et x(n) sont les échantillons du signal en sortie de l'étage de corrélation.

Dans un autre aspect particulier de l'invention, l'erreur de prédiction linéaire e(n) est moyennée sur une durée donnée avant comparaison au seuil de détection.

L'invention a également pour objet un récepteur GNSS comportant au moins une antenne adaptée à recevoir un signal GNSS, des moyens radios de conversion analogique numérique, un étage de corrélation, des moyens de traitement de signal délivrant à leur sortie une information de positionnement ou de navigation, caractérisé en ce qu'il comporte en outre des moyens adaptés à exécuter le procédé de détection de la déformation dudit signal GNSS selon l'invention.

D'autres caractéristiques et avantages de l'invention apparaîtront à l'aide de la description qui suit faite en regard des dessins annexés qui représentent :

La figure 1, une illustration de deux exemples de déformation impactant un signal GNSS,
La figure 2, un synoptique d'un récepteur GNSS selon l'invention.

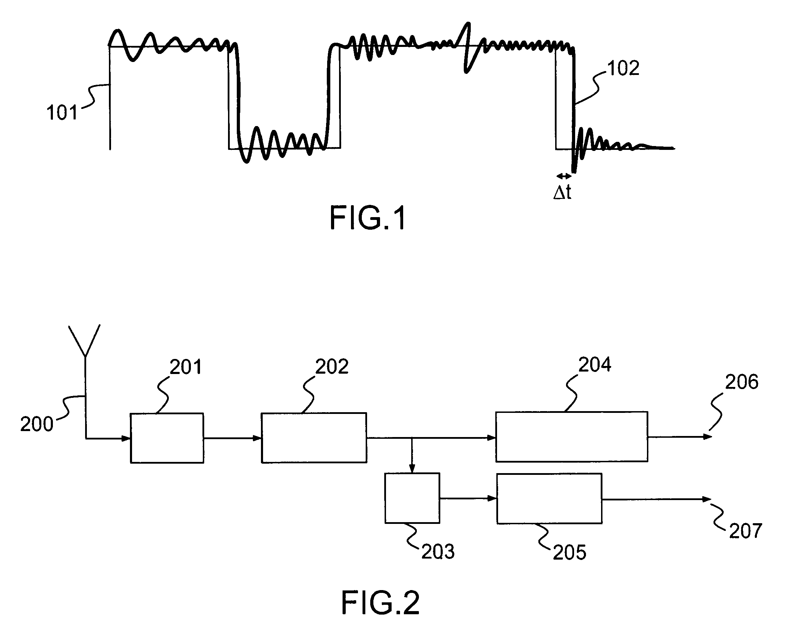

La figure 1 schématise une portion de signal GNSS parfait 101 qui est constitué d'une succession de créneaux temporels dont la période de répétition est connue et déterminée par le code d'étalement associé au signal transmis. Sur la figure 1 est représenté en superposition un signal GNSS imparfait 102 ou signal « evil waveform » déformé par rapport au signal parfait 101. Les déformations prennent notamment deux formes. Une première déformation de la période du code d'étalement engendre un décalage temporel $\Delta t$ entre le signal reçu 102 et le signal 101. Ce décalage temporel va entrainer un décalage entre le pic de corrélation mesuré et celui qui devrait réellement être observé et ainsi induire une erreur sur l'instant de réception du signal émis par le satellite.

Une seconde déformation sous la forme d'ondulations du signal 102 engendre des erreurs notamment sur les mesures effectuées sur la fonction de corrélation utilisée pour calculer les pseudo-distances entre le récepteur et les satellites puis élaborer, par triangulation, une information de positionnement. De telles ondulations ont pour effet une fonction de corrélation asymétrique et distordue ce qui pose également des problèmes d'estimation du pic de corrélation qui indique l'instant de réception du signal émis par le satellite.

Les déformations précités ont un impact sur l'intégrité du signal GNSS. L'invention vise notamment à détecter les deux types de déformation précités mais est applicable également à tout type de déformation impactant l'intégrité du signal GNSS et ayant pour origine un défaut de génération du signal à bord du satellite.

La figure 2 schématise un exemple d'architecture d'un récepteur GNSS selon l'invention. Une antenne 200 réceptionne un ou plusieurs signaux GNSS émis par un ou plusieurs satellites d'une constellation GNSS (non représentés). Le signal analogique acquis par l'antenne 200 est traité par des moyens 201 de traitement radio pour convertir ce signal analogique en un signal numérique. Des moyens 202 d'intégration du signal numérique et de corrélation du signal avec un code d'étalement connu produisent en sortie un signal $S_c$ qui est exploité par des moyens 204 de traitement de signal qui produisent en sortie des informations 206 de positionnement, de vitesse ou de navigation. Le récepteur selon l'invention comporte en outre des moyens 203 de calcul d'erreur de prédiction linéaire, ou EPC, appliqué au signal de sortie $S_c$ des moyens 202 d'intégration et de corrélation. L'erreur de prédiction linéaire est ensuite fournie en entrée d'un détecteur d'erreur 205 qui produit à sa sortie une information 207 sur la déformation du signal et sa non-conformité aux spécifications du système GNSS. Cette information peut être transmise à un système d'augmentation de la disponibilité du système GNSS (non représenté sur la figure), par exemple le système EGNOS, afin d'alerter d'autres récepteurs GNSS de la non-conformité du signal GNSS transmis.

Afin de pouvoir détecter les défauts impactant le signal GNSS reçu, il convient dans un premier temps d'élaborer un modèle mathématique du signal en sortie des moyens 202 d'intégration et de corrélation. La forme attendue d'un tel signal étant connue, il est possible de construire un modèle mathématique autorégressif à partir de méthodes d'élaboration connues de l'Homme du métier. Par exemple, une méthode de covariances, de covariances modifiées ou encore une méthode de Yule Walker permettent d'élaborer un tel modèle à partir des caractéristiques connues et attendues d'un signal GNSS spécifié. Toute méthode connue permettant de déterminer un modèle autorégressif paramétrique d'un signal à partir de ses caractéristiques est envisageable. De telles méthodes sont, par exemple, décrites dans l'ouvrage « Stoica, P., and R.L. Moses, Introduction to Spectral Analysis, Prentice-Hall, 1997 ». Le modèle autorégressif est défini, notamment, par un nombre p de coefficients $a_k$. La variable p désigne l'ordre du modèle autorégressif. Une fois ce modèle défini, le procédé selon l'invention consiste dans une première étape à calculer l'erreur de prédiction linéaire entre le signal en sortie de corrélation et le modèle autorégressif. Le calcul d'erreur de prédiction linéaire est réalisé, par exemple, par l'exécution de la relation suivante :

$$e(n) = x(n) - \hat{x}(n) = x(n) - \sum_{k=1}^{p} a_k x(n-k)$$

avec x le signal à analyser en sortie de corrélation, $x(n)$ un échantillon de ce signal obtenu à un instant n et $\hat{x}$ le signal issu de la modélisation autorégressive. L'erreur instantanée $e(n)$ est ensuite éventuellement moyennée sur une durée temporelle donnée afin de produire une erreur E de prédiction linéaire moyenne. La moyenne peut également être réalisée par le biais d'une fenêtre glissante. L'erreur instantanée $e(n)$ peut aussi être contrôlée en continu afin de détecter des imperfections locales du signal. Dans une étape suivante, l'erreur de prédiction linéaire instantanée ou moyennée sur une durée donnée est comparée à un ou plusieurs seuils de détection afin de déterminer si le signal GNSS est entaché d'erreurs et est inexploitable. Les seuils de détection sont déterminés par simulation de façon à minimiser la probabilité de fausse alarme et maximiser la probabilité de détection de défauts liés à la génération du signal ou aux imperfections de l'émetteur (signal « evil waveform »).

Dans une variante de réalisation de l'invention, plusieurs modèles autorégressifs peuvent être élaborés afin de tenir compte de variations d'amplitudes ou de retards appliqués au signal parfait en sortie de corrélation. Ces amplitudes et retards traduisent la déformation du signal par rapport au signal parfait qui devrait être émis et sont pris en compte pour élaborer des modèles les plus proches possibles des formes réelles des signaux dégradés à détecter. Plusieurs erreurs de prédiction linéaires sont ainsi calculées et comparées à des seuils de détection distincts.

**Revendications**

1. Procédé de détection de la déformation d'un signal GNSS transmis par au moins un satellite GNSS et reçu par au moins un récepteur GNSS, ladite déformation ayant pour origine un défaut de génération du signal GNSS, ledit procédé étant **caractérisé en ce qu'**il comporte au moins les étapes suivantes :

    o une étape de détermination d'au moins un modèle paramétrique autorégressif du signal GNSS en sortie d'un étage de corrélation que comporte ledit récepteur GNSS,
    o une étape de calcul (203) d'au moins une erreur de prédiction linéaire $e(n)$ entre ledit signal de sortie de l'étage de corrélation et ledit modèle paramétrique autorégressif,
    o au moins une étape de comparaison (205) de l'erreur de prédiction linéaire à un seuil de détection,
    o une étape de décision (207) sur la déformation du signal GNSS transmis dans le cas où l'erreur de prédiction linéaire dépasse ledit seuil de détection.

2. Procédé de détection selon la revendication 1 **caractérisé en ce que** le modèle paramétrique autorégressif est obtenu par application d'une des méthodes suivantes: méthode des covariances, méthode des covariances modifiées, méthode de Yule Walker.

3. Procédé de détection selon l'une des revendications précédentes **caractérisé en ce que** le calcul de l'erreur de prédiction linéaire $e(n)$ est effectué au moins à l'aide de la relation suivante :

$$e(n) = x(n) - \hat{x}(n) = x(n) - \sum_{k=1}^{p} a_k x(n-k),$$   où $a_k$ sont les coefficients du modèle autorégressif comportant un nombre p de coefficients et $x(n)$ sont les échantillons du signal en sortie de l'étage de corrélation.

4. Procédé de détection selon l'une des revendications précédentes **caractérisé en ce que** l'erreur de prédiction linéaire $e(n)$ est moyennée sur une durée donnée avant comparaison au seuil de détection.

5. Procédé de détection selon l'une des revendications précédentes **caractérisé en ce que** l'information sur la déformation du signal GNSS est en outre transmise à un système d'augmentation de la disponibilité du système GNSS.

6. Récepteur GNSS comportant au moins une antenne (200) adaptée à recevoir un signal GNSS, des moyens (201) radios de conversion analogique numérique, un étage de corrélation (202), des moyens (204) de traitement de signal délivrant à leur sortie une information de positionnement ou de navigation, **caractérisé en ce qu'**il comporte en outre des moyens (203,205) adaptés à exécuter les étapes du procédé de détection de la déformation dudit signal GNSS selon l'une des revendications 1 à 5.

**Patentansprüche**

**1.** Verfahren zum Erkennen der Verzerrung eines GNSS-Signals, das von wenigstens einem GNSS-Satelliten gesendet und von wenigstens einem GNSS-Empfänger empfangen wird, wobei die Verzerrungsquelle ein Fehler bei der Erzeugung des GNSS-Signals ist, wobei das Verfahren **dadurch gekennzeichnet ist, dass** es wenigstens die folgenden Schritte beinhaltet:

○ einen Schritt des Ermittelns wenigstens eines autoregressiven parametrischen Modells des GNSS-Signals am Ausgang einer in dem GNSS-Empfänger enthaltenen Korrelationsstufe,
○ einen Schritt des Berechnens (203) wenigstens eines linearen Vorhersagefehlers e(n) zwischen dem Signal am Ausgang der Korrelationsstufe und dem autoregressiven parametrischen Modell,
○ wenigstens einen Schritt des Vergleichens (205) des linearen Vorhersagefehlers mit einer Erkennungsschwelle,
○ einen Schritt des Entscheidens (207) über die Verzerrung des gesendeten GNSS-Signals, falls der lineare Vorhersagefehler die Erkennungsschwelle übersteigt.

**2.** Erkennungsverfahren nach Anspruch 1, **dadurch gekennzeichnet, dass** das autoregressive parametrische Modell durch Anwenden von einer der folgenden Methoden erhalten wird: einer Kovarianz-Methode, einer modifizierten Kovarianz-Methode oder einer Yule-Walker-Methode.

**3.** Erkennungsverfahren nach einem der folgenden Ansprüche, **dadurch gekennzeichnet, dass** das Berechnen des linearen Vorhersagefehlers e(n) wenigstens anhand der folgenden Gleichung durchgeführt wird:

$$e(n) = x(n) - \hat{x}(n) = x(n) - \sum_{k=1}^{p} a_k x(n-k)$$

wobei $a_k$ die Koeffizienten des autoregressiven Modells sind, die eine Anzahl p von Koeffizienten beinhalten, und x(n) die Samples des Signals am Ausgang der Korrelationsstufe sind.

**4.** Erkennungsverfahren nach einem der vorherigen Ansprüche, **dadurch gekennzeichnet, dass** der lineare Vorhersagefehler e(n) über eine gegebene Dauer vor dem Vergleichen mit der Erkennungsschwelle gemittelt wird.

**5.** Erkennungsverfahren nach einem der vorherigen Ansprüche, **dadurch gekennzeichnet, dass** die Informationen über die Verzerrung des GNSS-Signals auch zu einem System zum Verbessern der Verfügbarkeit des GNSS-Systems gesendet werden.

**6.** GNSS-Empfänger, der Folgendes umfasst: wenigstens eine Antenne (200) zum Empfangen eines GNSS-Signals, Analog-Digital-Wandlungsradiomittel (201), eine Korrelationsstufe (202), Signalverarbeitungsmittel (204), die an ihrem Ausgang Positionierungs- oder Navigationsinformationen liefern, **dadurch gekennzeichnet, dass** er ferner Mittel (203, 205) zum Ausführen der Schritte des Verfahrens zum Erkennen der Verzerrung des GNSS-Signals nach einem der Ansprüche 1 bis 5 umfasst.

**Claims**

**1.** A method for detecting the distortion of a GNSS signal transmitted by at least one GNSS satellite and received by at least one GNSS receiver, the source of said distortion being a fault in the generation of the GNSS signal, said method being **characterised in that** it comprises at least the following steps:

○ a step of determining at least one auto-regressive parametric model of the GNSS signal at the output of a correlation stage included in said GNSS receiver,
○ a step of calculating (203) at least one linear prediction error e(n) between said signal at the output of the correlation stage and said auto-regressive parametric model,
○ at least one step of comparing (205) the linear prediction error with a detection threshold,
○ a step of deciding (207) on the distortion of the transmitted GNSS signal in the event that the linear prediction error exceeds said detection threshold.

2. The detection method according to claim 1, **characterised in that** said auto-regressive parametric model is obtained by applying one of the following methods: a covariances method, a modified covariances method or a Yule Walker method.

3. The detection method according to any one of the preceding claims, **characterised in that** calculating the linear prediction error e(n) is at least carried out using the following relation:

,

$$e(n) = x(n) - \hat{x}(n) = x(n) - \sum_{k=1}^{p} a_k x(n-k)$$ where $a_k$ are the coefficients of said auto-regres-

,

sive model comprising a number p of coefficients and x(n) are the samples of the signal at the output of the correlation stage.

4. The detection method according to any one of the preceding claims, **characterised in that** the linear prediction error e(n) is averaged over a given duration before being compared with the detection threshold.

5. The detection method according to any one of the preceding claims, **characterised in that** the information relating to the distortion of the GNSS signal is also transmitted to a system for enhancing the availability of the GNSS system.

6. A GNSS receiver comprising at least one antenna (200) that is designed to receive a GNSS signal, radio means (201) for analogue-digital conversion, a correlation stage (202), signal processing means (204) delivering positioning or navigation information as output, **characterised in that** it further comprises means (203, 205) that are designed to execute the steps of the method for detecting the distortion of said GNSS signal according to any one of claims 1 to 5.

FIG.1

FIG.2

## RÉFÉRENCES CITÉES DANS LA DESCRIPTION

**Littérature non-brevet citée dans la description**

- *Characterization of signal déformations for GPS and WAAS satellites, 23rd international technical meeting of the satellite division of the institute of navigation,* 24 Septembre 2012

- Development of a transform-domain instrumentation global positioning system receiver for signal quality and anomalous event monitoring. *Sanjeev Gunawardena,* 30 Juin 2007, 82-105
- **STOICA, P. ; R.L. MOSES.** Introduction to Spectral Analysis. Prentice-Hall, 1997